# FASCICULE DE BREVET EUROPEEN

(11) **EP 3 055 257 B1**
(45) Date de publication et mention de la délivrance du brevet: **12.09.2018**
(21) Numéro de dépôt: 14780883.6
(22) Date de dépôt: 06.10.2014
(51) Int. Cl.: C03B 18/18, C03B 18/16

(54) **BAIN DE METAL EN FUSION, EN PARTICULIER D'ÉTAIN, DE LIGNE DE PRODUCTION DE VERRE PLAT ET PROCÉDÉ PERMETTANT DE LIMITER LES DIFFÉRENCES DE DILATATION ENTRE LA VOÛTE ET LA CUVE**
BAD FÜR GESCHMOLZENES METALL, INSBESONDERE FÜR ZINN, EINER FLACHGLAS-PRODUKTIONSLINIE UND VERFAHRUNG ZUR REDUZIERUNG DER AUSDEHNUNGSDIFFERENZEN ZWISCHEN DEM GEWÖLBE UND DEM BADBEHÄLTER
BATH OF MOLTEN METAL, IN PARTICULAR OF TIN, IN A FLAT GLASS PRODUCTION LINE AND METHOD FOR REDUCING THE EXPANSION DIFFERENCES BETWEEN THE VAULT AND THE TANK

(30) Priorité: 07.10.2013 BE 201300669
(43) Date de publication de la demande: 17.08.2016
(73) Titulaire: Fives Stein S.A., 94700 Maisons Alfort (FR)
(72) Inventeur: DERIBREUX, Luc, B-4606 Saint-Andre (BE); GEORGES, Christian, B-5150 Franière (BE); DACHELET, Marc, B-5590 Pessoux (BE)
(74) Mandataire: IP Trust
(86) Numéro de dépôt international: PCT/EP2014/071352
(87) Numéro de publication internationale: WO 2015/052138

(56) Documents cités:
- EP-A1- 2 457 879
- EP-A2- 2 460 774
- CN-A- 102 583 969
- GB-A- 958 504
- US-A- 3 976 460

## Description

### Domaine d'application

L'invention concerne le bain de métal en fusion, généralement de l'étain, que l'on trouve dans une ligne de production en continu de verre plat (verre flotté). Cet équipement placé entre le four de fusion et de maintien et l'étenderie permet de former le ruban de verre à l'épaisseur et à la largeur souhaitées sur un bain de métal en fusion, en particulier d'étain.

### Problème technique auquel l'invention apporte une solution

L'invention apporte une solution de supportage de la voûte d'un bain de métal en fusion, généralement de l'étain, sur une ligne de production de verre plat, qui diminue ou supprime le risque d'apparition de fuites entre l'intérieur du bain et l'extérieur, fuites provoquées par des déplacements différents entre la voûte du bain et la cuve inférieure.

En effet, toute apparition d'oxygène dans l'enceinte du bain d'étain, normalement rempli d'une atmosphère contrôlée de gaz, principalement de l'azote avec une certaine proportion d'hydrogène, est susceptible de créer des oxydes, notamment des oxydes d'étain, qui eux-mêmes participent à des processus de génération de défauts sur la feuille de verre. Pour éviter ce phénomène, une étanchéité entre les diverses parties constituant l'enceinte du bain d'étain est réalisée par ce que l'homme de métier appelle « margeage », qui est un joint créé entre deux éléments proches. Les surfaces jointives réalisent une forme d'entaille en V remplie par un mortier spécial prenant par séchage, avec ou sans addition de fibres céramiques. Ce margeage est volontairement fragile afin de permettre le démontage rapide des éléments étanchés, grâce au bris de la couche de mortier, à des fins d'intervention de maintenance. Ce margeage doit être revu fréquemment suite à l'apparition de fissures qui sont dues à des mouvements différenciés entre la cuve contenant le bain d'étain et la voûte.

### Etat de l'art, imperfections de l'état de l'art et problème technique à résoudre

Le document EP 2 460 774 A2 décrit un bain d'étain. Toutefois, ce document ne s'intéresse pas au problème de la diminution de fuites entre l'intérieur du bain et l'extérieur liées aux déplacements longitudinaux de la voûte et de la cuve suite aux dilatations thermique.

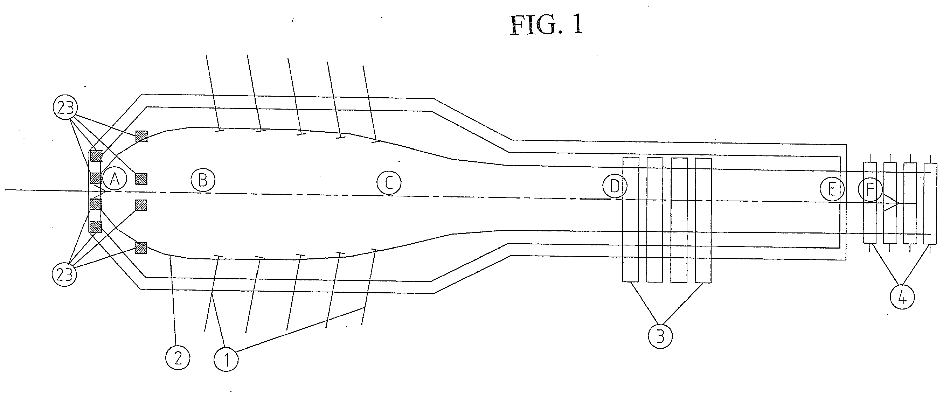

De manière également connue, la figure 1 présente en élévation de manière schématique l'état de l'art du procédé d'étalement d'un débit continu de verre visqueux sur un bain d'étain, de manière à obtenir une feuille d'épaisseur et largeur maîtrisées. Le sens du flux de verre est indiqué par des flèches, de gauche à droite. Le verre est versé à une température où il s'écoule de manière visqueuse sur le métal en fusion et à débit constant en A. La couche de verre s'étale naturellement ensuite par gravité jusqu'en B, où des machines auxiliaires 1, dénommées Top-rollers, maintiennent les bords de la feuille 2 de manière à ce que l'étirement provoqué par l'étenderie en F résulte en une diminution d'épaisseur sans diminution de largeur jusqu'en C, à partir de quoi la diminution de largeur et d'épaisseur se font sensiblement dans la même proportion. A partir de D, la feuille ainsi formée est refroidie, principalement par radiation, au moyen de refroidisseurs 3 la surplombant, de manière à obtenir une température suffisante pour figer la feuille afin de la soulever du bain d'étain en E et de l'extraire hors de l'enceinte du bain vers l'étenderie, constituée de rouleaux successifs 4.

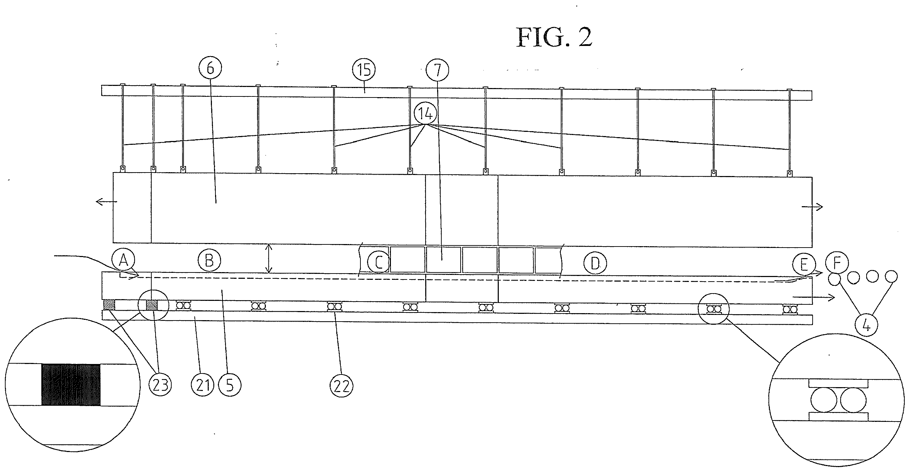

La figure 2 présente une vue latérale schématique du même équipement et procédé, et montre que l'ensemble du procédé est réalisé dans une enceinte formée de trois constituants principaux, la cuve de bain 5 proprement dite, la voûte 6 la surplombant, et les caissons d'étanchéité de bord 7, aussi appelés « side-sealings », réalisant la jonction entre les deux éléments précédents. En effet, l'ensemble du procédé doit être réalisé sous une atmosphère protectrice afin d'éviter notamment l'oxydation du métal en fusion en présence d'air, et donc l'enceinte doit être suffisamment étanche vis-à-vis de l'atmosphère extérieure, mais l'intérieur de l'enceinte doit être accessible à tout endroit par les côtés aux opérateurs afin d'y faire pénétrer les divers équipements auxiliaires, ou encore de permettre des opérations de guidage de la feuille lors du démarrage du procédé. Les caissons de bords 7 sont donc facilement amovibles, et sont simplement posés sur les faces latérales de la cuve 5. L'étanchéité entre les diverses parties constituant l'enceinte du bain d'étain est réalisée par ce que l'homme de métier appelle « margeage », qui consiste en un joint créé entre deux éléments proches, dont les faces jointives réalisent une forme d'entaille en V, que l'on remplit par un mortier spécial prenant par séchage, avec ou sans addition de fibres céramiques.

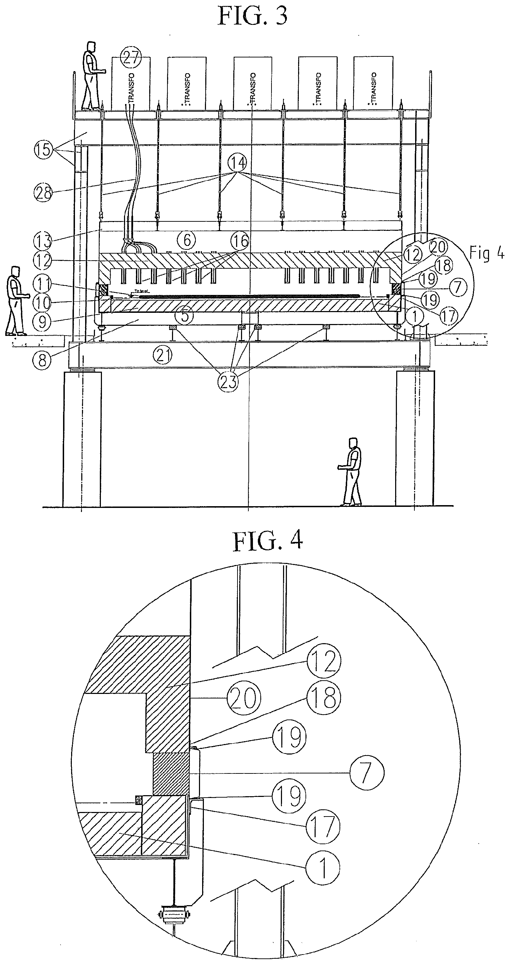

De manière plus détaillée, la figure 3 présente une coupe transversale de l'équipement et procédé selon l'état de l'art en B. La cuve de bain 5 est constituée d'une enveloppe métallique 8 en forme de canal, garnie de matériau réfractaire 9 en forme de canal également, qui contient à son tour le métal en fusion 10, sur lequel la feuille de verre 11 est étalée et formée. La voûte 6 qui surplombe la cuve 5 et crée ainsi avec elle l'enceinte du bain d'étain est composée d'un garnissage réfractaire 12 supporté par une structure métallique 13 suspendue par une multitude de tirants 14, de longueur réglable en continu, à une charpente 15 qui surplombe l'ensemble de la surface du bain d'étain. Des résistances électriques 16 sont suspendues dans la voûte 6 pour maintenir sa température au niveau nécessaire afin d'assurer le maintien du métal 10 en fusion et conditionner en température la feuille de verre 11 en fonction de son épaisseur, de sa nature et du produit à réaliser.

Sur chaque section de la voûte 6 du bain d'étain, un ensemble de 4 ou 6 tirants 14 assure la suspension de la voûte durant chaque phase de son cycle de vie : en montage à froid, durant la mise en température du bain, durant toute la période d'exploitation du bain et durant les phases de maintenance totale ou partielles.

La figure 4 est un agrandissement d'une partie de la figure 3 qui montre une jonction typique entre la voûte 4 et la cuve en réfractaire 1. Le repère 7 présente les caissons de bord, qui sont les éléments de fermeture entre la voûte 6 et la cuve 5, également appelés « side-sealing ». Ce sont des caisses métalliques remplies de matériau d'isolation thermique afin de réduire les pertes de chaleur vers l'extérieur et assurer un minimum de sécurité pour les opérateurs, par réduction de la température de contact. La géométrie de ces sides-sealing permet la réalisation de l'étanchéité de l'enceinte du bain par le margeage au mortier. Plus précisément, des cornières 17 sont fixées sur le caisson métallique de cuve 8, et des cornières 18 sont fixées sur l'enveloppe métallique de voûte 20, formant avec les caissons de bord une entaille d'axe horizontal en forme de V, créant un espace adéquat pour recevoir le joint de mortier 19. De même, entre deux caissons de bord consécutifs, une entaille similaire d'axe vertical est formée de manière à recevoir aisément le mortier de margeage. Ces joints de mortier doivent être suffisamment étanches pour minimiser les pertes d'atmosphère et empêcher toute entrée d'air, tout étant suffisamment fragiles pour assurer un démontage aisé et rapide en cas d'intervention nécessaire dans l'enceinte du bain.

On comprend cependant, en analysant les figures 1 et 2, que la cuve de bain 5 particulièrement longue, typiquement de 50 à 80 m de longueur, travaillant à des températures élevées et variables en fonction des conditions de production, typiquement de 140 à 220°C par exemple, voit sa partie métallique 8 se dilater de manière importante, ce qui impose un montage particulier, autorisant ces dilatations sans contraintes. En effet, le caisson métallique 8 contenant la cuve est supporté par une charpente intermédiaire 21 fixée rigidement aux fondations du bâtiment et génie civil. Le caisson métallique 8 est supporté sur cette charpente intermédiaire 21 par une multitude d'appuis glissants ou roulants 22, à l'exception des appuis fixes 23, souvent dénommés globalement « point fixe », mais étant en réalité plutôt une zone de liaison rigide du caisson 8 à la charpente 21. Les appuis roulants 22 permettent le déplacement relatif du caisson 8 sur la charpente 21 selon l'axe du procédé, mais pas dans les directions latérales et verticales. De ce fait, l'ensemble de l'expansion thermique de la cuve est dirigé dans le sens du procédé.

Sur la figure 2, on peut constater par contre que la suspension de la voûte 6 par la multitude de tirants 14 donne un résultat différent. Ce type de suspension permet la dilatation de la voûte dans toutes les directions horizontales, mais ne comprend pas de guidage transversal ni de point fixe. Par exemple, lorsque la température d'un côté de la structure métallique supportant la voûte, est suffisamment différente de celle de l'autre côté, les déformations thermiques différentielles peuvent engendrer un fléchissement latéral de la structure de la voûte dans le plan horizontal. Le réglage en position et longueur de ces tirants est particulièrement critique car tout changement de position dévie l'axe du tirant de sa verticale, et cette angulation, ou déport provoque une perturbation minime mais réelle de la hauteur vraie de la voûte 6 par rapport à la cuve 5. Bien que les articulations des tirants 14 par rapport à la charpente 15 sont prévus pour autoriser principalement des déplacements dans la direction du procédé, ils ne sont cependant pas assez raides pour prétendre limiter les déviations perpendiculaires à la direction du procédé dans le plan horizontal. De plus, les réglages sont difficiles car il faut idéalement manipuler les tirants de manière simultanée, ce qui n'est réalisé que de manière approximative dans la pratique, en opérant par exemple par groupes de tirants proches les uns des autres.

Cependant le phénomène le plus gênant est lié aux différences de température d'une part de la partie métallique 8 contenant la cuve réfractaire 9 du bain proprement dit, et d'autre part de la structure métallique 13 à laquelle la voûte est suspendue. Ces différences de température peuvent engendrer des dilatations différentielles, d'autant plus importantes que la dilatation de la cuve 5 selon l'axe du procédé est guidée et orientée, alors que la dilatation de la voûte 6 se réalise de manière libre dans toutes les directions du plan horizontal.

Le margeage 19 étant réalisé à base de mortier réfractaire relativement fragile, la moindre variation de la géométrie du joint est susceptible de créer des fissures et donc une entrée d'air extérieur pouvant provoquer l'oxydation du bain et ainsi créer de potentiels défauts du produit. Il est donc parfois nécessaire d'agir sur les tirants de telle façon que des mouvements dus à la dilatation de la voûte dans toutes les directions soient compensés. Cette opération est délicate et comporte le risque de descendre la voûte 6 de façon trop importante et finir par bloquer les caissons de bord, ce qui peut rendre difficile ou empêcher leur enlèvement lors d'opérations urgentes, pour la récupération d'une feuille en cas de rupture du ruban dans le bain par exemple. L'opération de réglage de hauteur du roof est donc compliquée et requiert suffisamment de personnel car le réglage doit se faire de façon simultanée sur les différents tirants.

Lors de la montée en température du bain, on comprend que la différence de dilatation des structures métalliques support 8 et de la partie métallique de la voûte du bain 4 vont entraîner un désalignement des tirants dont la position va s'écarter de la verticale, ce qui va créer un effet de cisaillement sur le joint dans le plan horizontal et éloigner la voûte 4 de sa position verticale initiale telle que préréglée au démarrage de l'installation. Ce mouvement vertical de la voûte 4 ou son mouvement horizontal ou toute combinaison de ces deux mouvements peuvent créer un cisaillement ou une détérioration locale du joint 19, ce qui crée des fuites entre l'atmosphère du bain et l'extérieur du four. Ces fuites peuvent entraîner une oxydation du bain d'étain et l'apparition de défauts de qualité sur le verre.

Il est donc nécessaire de mettre en place un dispositif de supportage de la voûte 6 assurant son positionnement précis par rapport à la cuve 1 et évitant les déplacements de la voûte dans les directions verticales et horizontales afin d'en assurer l'étanchéité pour supprimer le risque d'apparition de fuites, y compris lors de changements de régimes thermiques du bain qui modifient la dilatation des différentes parties du supportage de la voûte, en particulier la charpente qui surplombe la voûte et l'ensemble des tirants.

### Description détaillée de l'invention

L'invention consiste en premier lieu en une voûte reposant sur des appuis glissants ou roulants guidant et orientant les dilatations thermiques de l'ensemble de la voûte selon la direction du procédé, et comportant un « point fixe » au voisinage de l'aplomb de celui de la cuve.

L'invention consiste également en un procédé de maîtrise des expansions thermiques de la cuve et de la voûte, de manière à supprimer ou diminuer les différences de dilatations des deux ensembles, et de ce fait de supprimer ou diminuer les contraintes sur le margeage.

Selon l'invention, un bain d'étain de ligne de production de verre plat flotté comprenant une voûte recouvrant une cuve dans laquelle se trouve de l'étain liquide, est caractérisé en ce que la voûte comprend un « point fixe » au voisinage de l'aplomb du « point fixe » de la cuve.

Plus précisément, selon l'invention, un bain de métal en fusion, en particulier d'étain, de ligne de production de verre plat flotté comprend une enceinte formée de trois constituants principaux, une cuve de bain, dans laquelle se trouve du métal liquide, en particulier de l'étain, une voûte la surplombant, et des caissons d'étanchéité de bord, réalisant la jonction entre les deux éléments précédents, la cuve de bain étant constituée d'un caisson métallique, garni de matériau réfractaire, pouvant se déplacer sur une charpente selon l'axe du procédé, à l'exception d'appuis fixes, dénommés « point fixe », formés par une zone de liaison rigide du caisson à la charpente, et est caractérisé en ce que la voûte repose sur des appuis glissants ou roulants guidant et orientant les dilatations thermiques de l'ensemble de la voûte selon la direction du procédé, et comporte un « point fixe » au voisinage de l'aplomb du « point fixe » de la cuve.

L'axe, ou la direction, du procédé sont synonymes d'axe, ou direction, d'avance de la feuille de verre.

L'invention concerne une solution aux dilatations différentielles de deux structures métalliques principales, de la cuve et de la voûte, en forme de caisson. Les dilatations de réfractaires contenus à l'intérieur de ces caissons sont traitées par des suspentes pour les réfractaires de voûte et par un gougeonnage avec joints de dilatation pour les réfractaires de fond, ou de cuve.

Avantageusement, la voûte est constituée d'une structure autoporteuse qui repose directement de chaque côté de la cuve sur une charpente support, par l'intermédiaire d'un nombre limité et adapté d'appuis glissants ou roulants.

La structure autoporteuse de la voûte ne crée pas d'efforts de cisaillement sur la structure latérale, constituée par la charpente support, qui ne reprend que des efforts verticaux.

Le déplacement de la voûte qui résulte de sa dilatation peut être guidé par un système de guidage intégré dans les appuis. En variante, le déplacement de la voûte qui résulte de sa dilatation peut être guidé par un système de guidage extérieur aux appuis.

Le « point fixe » de voûte peut être constitué par une zone de liaison rigide de la voûte à une charpente, solidaire de la charpente qui supporte la cuve.

Avantageusement, les transformateurs d'alimentation des résistances électriques de chauffage de voûte reposent directement sur la structure autoporteuse de la voûte.

Le bain de métal, en particulier d'étain, de ligne de production de verre plat peut comprendre un portique permettant le montage et le démontage rapide de tronçons de la voûte, ainsi que les opérations de manutention pour le montage et la réparation d'équipements du bain de métal.

L'invention est également relative à un procédé, permettant de limiter les dilatations différentielles entre une cuve et une voûte d'un bain de métal en fusion, en particulier d'étain, de ligne de production de verre plat flotté, de sorte d'éviter la dégradation des joints de margeage entre la cuve et la voûte, pouvant provoquer des fuites de gaz entre l'atmosphère du bain et l'extérieur de la cuve, lequel procédé est caractérisé en ce qu'il consiste à surveiller la dilatation différentielle longitudinale entre la voûte et la cuve par une mesure en continu de celle-ci et à moduler le refroidissement de la cuve de manière à conserver la dilatation différentielle longitudinale dans des limites définies.

Plus précisément, selon l'invention, le procédé permettant de limiter les dilatations différentielles entre une cuve et une voûte d'un bain de métal en fusion, en particulier d'étain, de ligne de production de verre plat flotté, alors que des caissons d'étanchéité de bord réalisent la jonction entre les deux éléments précédents, la cuve de bain étant constituée d'un caisson métallique, garni de matériau réfractaire, pouvant se déplacer sur une charpente selon l'axe du procédé, à l'exception d'appuis fixes, dénommés « point fixe », formés par une zone de liaison rigide du caisson à la charpente, la voûte reposant sur des appuis glissants ou roulants guidant et orientant les dilatations thermiques de l'ensemble de la voûte selon la direction du procédé, et comportant un « point fixe » au voisinage de l'aplomb du « point fixe » de la cuve, lequel procédé est caractérisé en ce qu'il consiste à surveiller la dilatation différentielle longitudinale entre la voûte et la cuve par une mesure en continu de celle-ci et à moduler le refroidissement de la cuve de manière à conserver la dilatation différentielle longitudinale dans des limites définies, de sorte d'éviter la dégradation de joints de margeage entre la cuve et la voûte, pouvant provoquer des fuites de gaz entre l'atmosphère du bain et l'extérieur de la cuve,

La mesure de la dilatation différentielle longitudinale entre la voûte et la cuve peut être réalisée au moyen de capteurs de dilatation.

Avantageusement, la dilatation différentielle longitudinale est maintenue inférieure à + et - 0.05 mm/m.

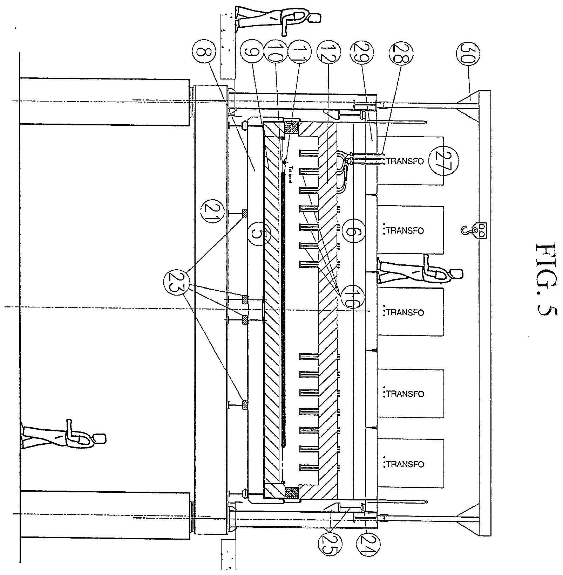

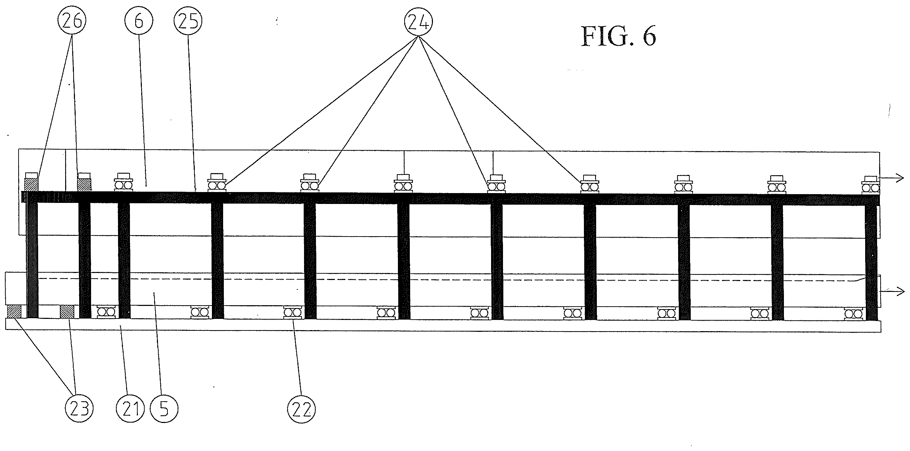

L'invention consiste, mis à part les dispositions exposées ci-dessus, en un certain nombre d'autres dispositions dont il sera plus explicitement question ci-après avec référence aux figures 5 et 6, représentations schématiques en coupe transversale et en vue de côté d'un bain d'étain exemple de réalisation non limitatif de l'invention.

On peut voir représenté sur les figures 5 et 6 que selon l'invention la structure métallique qui surplombe le bain d'étain ainsi que les tirants 14 sont supprimés au profit d'un supportage plus compact, constitué d'une charpente 25 placée de part et d'autre de la cuve et solidaire de la charpente 21 de supportage de la cuve 5. C'est sur cette charpente 25 que glisse ou roule directement la structure métallique 29 de la voûte, au moyen d'appuis roulant ou glissants 24. Ces appuis roulants ou glissants peuvent également être guidants, en ce sens qu'ils autorisent dans le plan horizontal un déplacement relatif aisé et sans entrave dans la direction du procédé, sans autoriser de déplacement latéral. Cependant, le guidage latéral de la voûte 6 peut également être assuré par des moyens extérieurs aux appuis glissant ou roulants 24. La structure métallique 29 de la voûte est renforcée par rapport à l'état de l'art afin d'être autoporteuse sur la largeur du bain d'étain. L'influence des dilatations et des déports des tirants 14 a été supprimée. L'existence d'un « point fixe » 26 de voûte, en réalité un zone de liaison rigide 26 de la voûte 6 à la charpente 25, à l'aplomb du « point fixe » 23 de cuve, assure que ces deux ensembles voûte et cuve sont liés rigidement et que dans cette zone le margeage ne peut subir aucune contrainte dans le plan horizontal.

Lors de régimes de production différents, il existe des régimes de température différents de la voûte et du bain, les températures respectives de leurs structures métalliques peuvent être différentes et provoquer une expansion différente de chaque ensemble, source de contraintes et, à terme, de fissures dans le margeage. Afin d'éviter tout déplacement horizontal différentiel entre cuve et voûte, il est possible d'agir sur la température de cuve en adaptant en permanence le refroidissement forcé de celle-ci, de manière à maintenir la dilatation différentielle longitudinale de la structure métallique de la cuve du bain par rapport à celle de la voûte, dans une tolérance stricte. Pour piloter le refroidissement forcé et réguler les dilatations différentielles, un automatisme peut surveiller non seulement les températures, mais également au moyen de capteurs de dilatation les déplacements tant de la cuve que de la voûte. Comme on peut le constater, cette méthode de contrôle ne pourrait être réalisée avec un système de suspension par tirants selon l'état de l'art.

On voit également sur la figure 5 que la partie supérieure de la voûte du bain suivant l'invention est totalement libre de tout élément de structure (présence d'éléments de process uniquement tels que thermocouples, lunettes de visée, caméras, transformateurs ou autre). L'absence de tirants rend donc totalement libres l'implantation et l'accès à ces équipements.

Cet accès libre au-dessus de la voûte suivant la figure 5 permet également l'installation des transformateurs électriques 27 d'alimentation des résistances 16 directement au dessus de la voûte, ce qui permet de réduire considérablement la longueur des câbles secondaires 28 ce qui réduit également leurs pertes électriques par effet joule. Les câbles secondaires sont classiquement alimentés par des tensions basses (généralement inférieures à 100 volts) et avec un courant important. La suppression ou diminution de la longueur de ceux-ci permet une économie d'énergie de l'ordre de 0.5% de la consommation totale nécessaire au chauffage du bain.

La suppression de la charpente supérieure 15 et des tirants 14 permet également la mise en oeuvre de moyens de manutention des équipements tels qu'un portique roulant intégré 30 ou l'utilisation sans risque d'interférence d'un pont roulant intégré au bâtiment. Le portique roulant intégré 30 peut être utilisé pour le placement des sections de voûte et également pour la mise en place des transformateurs 27. Ce portique étant à demeure, il peut également être utilisé lors des opérations de réparation à froid (« cold repair ») ou en cas d'incident grave sur le bain (« hot repair »).

L'invention permet lors du montage initial, un montage complet de la charpente du bain sans pour cela gêner l'installation de la voûte par la suite. La suppression selon l'invention de la partie de la structure métallique servant à la suspension de la voûte par les tirants, permet de réduire la hauteur nécessaire du bâtiment. L'installation de passerelles permet l'accès aux équipements de contrôle et de pilotage du bain.

## Revendications

1. Bain de métal, en particulier d'étain, de ligne de production de verre plat flotté comprenant une enceinte formée de trois constituants principaux, une cuve de bain (5), dans laquelle se trouve du métal liquide, en particulier de l'étain liquide (10), une voûte (6) la surplombant, et des caissons d'étanchéité de bord (7), réalisant la jonction entre les deux éléments précédents, la cuve de bain (5) étant constituée d'un caisson métallique (8), garni de matériau réfractaire (9), pouvant se déplacer sur une charpente (21) selon la direction de la ligne de production de verre, à l'exception d'appuis fixes (23), dénommés « point fixe », formés par une zone de liaison rigide du caisson à la charpente (21), **caractérisé en ce que** la voûte (6) repose sur des appuis glissants ou roulants (24) guidant et orientant les dilatations thermiques de l'ensemble de la voûte selon la direction de la ligne de production de verre, et comporte un « point fixe » (26) au voisinage de l'aplomb du « point fixe » (23) de la cuve (5).

2. Bain de métal, en particulier d'étain, de ligne de production de verre plat flotté suivant la revendication 1 , **caractérisé en ce que** le « point fixe » de voûte est constitué par une zone de liaison rigide (26) de la voûte (6) à une charpente (25), solidaire de la charpente (21) qui supporte la cuve (5).

3. Bain de métal, en particulier d'étain, de ligne de production de verre plat flotté suivant la revendication 1 ou 2, **caractérisé en ce que** la voûte (6) est constituée d'une structure autoporteuse (29) qui repose directement de chaque côté de la cuve (5) sur la charpente support (25), par l'intermédiaire d'un nombre limité et adapté d'appuis (24) glissants ou roulants.

4. Bain de métal, en particulier d'étain, de ligne de production de verre plat flotté suivant l'une quelconque des revendications 1 à 3, **caractérisé en ce que** le déplacement de la voûte (6) qui résulte de sa dilatation est guidé par un système de guidage intégré dans les appuis (24).

5. Bain de métal, en particulier d'étain, de ligne de production de verre plat flotté suivant l'une quelconque des revendications 1 à 3, **caractérisé en ce que** le déplacement de la voûte (6) qui résulte de sa dilatation est guidé par un système de guidage extérieur aux appuis (24).

6. Bain de métal, en particulier d'étain, de ligne de production de verre plat flotté suivant la revendication 3, **caractérisé en ce que** les transformateurs (27) d'alimentation des résistances électriques de chauffage de voûte reposent directement sur la structure autoporteuse (29) de la voûte.

7. Bain de métal, en particulier d'étain, de ligne de production de verre plat flotté suivant l'une quelconque des revendications précédentes, **caractérisé en ce qu'**il comprend un portique (30) permettant le montage et le démontage rapide de tronçons de la voûte (6), ainsi que les opérations de manutention pour le montage et la réparation d'équipements du bain d'étain.

8. Procédé permettant de limiter les dilatations différentielles entre une cuve (5) et une voûte (6) d'un bain de métal, en particulier d'étain, de ligne de production de verre plat flotté, des caissons d'étanchéité de bord (7) réalisant la jonction entre les deux éléments précédents, la cuve de bain (5) étant constituée d'un caisson métallique (8), garni de matériau réfractaire (9), pouvant se déplacer sur une charpente (21) selon la direction de la ligne de production de verre, à l'exception d'appuis fixes (23), dénommés « point fixe », formés par une zone de liaison rigide du caisson (8) à la charpente (21), la voûte (6) reposant sur des appuis glissants ou roulants (24) guidant et orientant les dilatations thermiques de l'ensemble de la voûte selon la direction de la ligne de production de verre, et comportant un « point fixe » (26) au voisinage de l'aplomb du « point fixe » (23) de la cuve (5),
**caractérisé en ce qu'**il consiste à surveiller la dilatation différentielle longitudinale entre la voûte (6) et la cuve (5) par une mesure en continu de celle-ci et à moduler le refroidissement de la cuve de manière à conserver la dilatation différentielle longitudinale dans des limites définies, de sorte d'éviter la dégradation de joints de margeage (19) entre la cuve (5) et la voûte (6), pouvant provoquer des fuites de gaz entre l'atmosphère du bain et l'extérieur de la cuve,

9. Procédé selon la revendication 8, **caractérisé en ce que** la mesure de la dilatation différentielle longitudinale entre la voûte (6) et la cuve (5) est réalisée au moyen de capteurs de dilatation.

10. Procédé selon la revendication 8 ou 9, **caractérisé en ce que** la dilatation différentielle longitudinale est maintenue inférieure à + et - 0.05 mm/m.

## Patentansprüche

1. Metallbad, insbesondere aus Zinn, einer Produktionslinie für flaches Float-Glas, umfassend eine Einfassung, die aus drei Hauptbestandteilen gebildet ist, einem Badbecken (5), in dem sich flüssiges Metall befindet, insbesondere flüssiges Zinn (10), ein es überragendes Gewölbe (6) und Randabdichtungskassetten (7), die die Verbindung zwischen den zwei vorherigen Elementen realisieren, wobei das Badbecken (5) aus einer Metallkassette (8) gebildet ist, die mit feuerfestem Material (9) ausgeschlagen ist, die sich auf einem Tragwerk (21) gemäß der Richtung der Produktionslinie für Glas mit Ausnahme von festen Stützen (23), bezeichnet als "Festpunkt", die durch einen steifen Verbindungsbereich der Kassette am Tragwerk (21) gebildet sind, verschieben kann, **dadurch gekennzeichnet, dass** das Gewölbe (6) auf gleitenden oder rollenden Stützen (24) ruht, die die thermischen Dilatationen der Gruppe des Gewölbes gemäß der Richtung der Produktionslinie für Glas führen und ausrichten, und umfasst einen "Festpunkt" (26) in der Nachbarschaft des Lotes des "Festpunktes" (23) des Beckens (5).

2. Metallbad, insbesondere aus Zinn, einer Produktionslinie für flaches Float-Glas gemäß Anspruch 1, **dadurch gekennzeichnet, dass** der "Festpunkt" des Gewölbes aus einem steifen Verbindungsbereich (26) des Gewölbes (6) an einem Tragwerk (25) gebildet ist, das fest mit dem Tragwerk (21) verbunden ist, das das Becken (5) stützt.

3. Metallbad, insbesondere aus Zinn, einer Produktionslinie für flaches Float-Glas gemäß Anspruch 1 oder 2, **dadurch gekennzeichnet, dass** das Gewölbe (6) aus einer selbsttragenden Struktur (29) gebildet ist, die direkt auf jeder Seite des Beckens (5) auf dem stützenden Tragwerk (25) mittels einer begrenzten und geeigneten Anzahl von gleitenden oder rollenden Stützen (24) ruht.

4. Metallbad, insbesondere aus Zinn, einer Produktionslinie für flaches Float-Glas gemäß irgendeinem der Ansprüche 1 bis 3, **dadurch gekennzeichnet, dass** die Verschiebung des Gewölbes (6), die aus ihrer Dilatation resultiert, durch ein in die Stützen (24) integriertes Führungssystem geführt ist.

5. Metallbad, insbesondere aus Zinn, einer Produktionslinie für flaches Float-Glas gemäß irgendeinem der Ansprüche 1 bis 3, **dadurch gekennzeichnet, dass** die Verschiebung des Gewölbes (6), die aus seiner Dilatation resultiert, durch ein zu den Stützen (24) äußeres Führungssystem geführt ist.

6. Metallbad, insbesondere aus Zinn, einer Produktionslinie für flaches Float-Glas gemäß Anspruch 3, **dadurch gekennzeichnet, dass** die Versorgungstransformatoren (27) der elektrischen Widerstände des Heizgewölbes direkt auf der selbsttragenden Struktur (29) des Gewölbes ruhen.

7. Metallbad, insbesondere aus Zinn, einer Produktionslinie für flaches Float-Glas gemäß irgendeinem der voranstehenden Ansprüche, **dadurch gekennzeichnet, dass** es einen Rahmen (30) umfasst, der die rasche Montage und die rasche Demontage von Abschnitten des Gewölbes (6) sowie die Handhabungsoperationen für die Montage und die Reparatur von Ausrüstungen des Zinnbades erlaubt.

8. Verfahren, das die Begrenzung der Differential-Dilatationen zwischen einem Becken (5) und einem Gewölbe (6) eines Metallbades, insbesondere aus Zinn, einer Produktionslinie für flaches Float-Glas erlaubt, wobei Randabdichtungskassetten (7) die Verbindung zwischen den zwei voranstehenden Elementen realisieren, wobei das Badbecken (5) aus einer Metallkassette (8) gebildet ist, die mit feuerfestem Material (9) ausgeschlagen ist, das sich auf einem Tragwerk (21) gemäß der Richtung der Produktionslinie für Glas mit Ausnahme von festen Stützen (23), bezeichnet als "Festpunkt", die durch einen steifen Verbindungsbereich der Kassette (8) an dem Tragwerk (21) gebildet sind, verschieben kann, wobei das Gewölbe (6) auf gleitenden oder rollenden Stützen (24) ruht, die die thermischen Dilatationen der Gruppe des Gewölbes gemäß der Richtung der Produktionslinie für Glas führen und ausrichten, und einen Festpunkt (26) in der Nachbarschaft des Lots des "Festpunktes" (23) des Beckens (5) umfasst,
**dadurch gekennzeichnet, dass** es in der Überwachung der länglichen Differential-Dilatation zwischen dem Gewölbe (6) und dem Becken (5) durch eine kontinuierliche Messung derselben und in der Modulation des Beckens derart besteht, dass die längliche Differential-Dilatation in den definierten Grenzen derart beibehalten wird, dass die Degradierung von Abdichtungsdichtungen (19) zwischen dem Becken (5) und dem Gewölbe (6), die das Austreten von Gas zwischen der Atmosphäre des Bades und dem Außenbereich des Beckens hervorrufen können, verhindert wird.

9. Verfahren gemäß Anspruch 8, **dadurch gekennzeichnet, dass** die Messung der länglichen Differential-Dilatation zwischen dem Gewölbe (6) und dem Becken (5) mittels Dilatationssensor realisiert wird.

10. Verfahren gemäß Anspruch 8 oder 9, **dadurch gekennzeichnet, dass** die längliche Differential-Dilatation unter + und - 0,05 mm/m gehalten wird.

## Claims

1. A metal, in particular tin, bath of a production line for producing flat float glass, comprising an enclosure formed by three main components, a bath vat (5) containing liquid metal, in particular liquid tin (10), a crown (6) overhanging same, and edge sealing cases (7), providing the connection between the above two elements, with the bath vat (5) consisting of a metal case (8), lined with refractory material (9), which can move on a framework (21) in the direction of the glass production line, except for stationary bearings (23), referred to as "fixed points", formed by a region rigidly connecting the case to the framework (21), **characterized in that** the crown (6) rests on sliding or rolling bearings (24) which guide and orient the thermal expansion of the entire crown in the direction of the glass production line, and comprises a "fixed point" (26) close to a point right above the "fixed point" (23) of the vat (5).

2. A metal, in particular tin, bath of a production line for producing flat float glass according to claim 1, **characterized in that** the "fixed point" of the crown consists of a region (26) rigidly connecting the crown (6) to a framework (25), integral with the framework (21) which supports the vat (5).

3. A metal, in particular tin, bath of a production line for producing flat float glass according to claim 1 or 2, **characterized in that** the crown (6) consists of a self-supporting structure (29) which directly rests on each side of the vat (5) on the support framework (25) through a limited and adapted number of sliding or rolling bearings (24) .

4. A metal, in particular tin, bath of a production line for producing flat float glass according to any one of claims 1 to 3, **characterized in that** the displacement of the crown (6) resulting from the expansion thereof is guided by a guiding system integrated in the bearings (24).

5. A metal, in particular tin, bath of a production line for producing flat float glass according to any one of claims 1 to 3, **characterized in that** the displacement of the crown (6) resulting from the expansion thereof is guided by a guiding system outside the bearings (24).

6. A metal, in particular tin, bath of a production line for producing flat float glass according to claim 3, **characterized in that** the transformers (27) supplying the electric resistors heating the crown directly rest on the self-supporting structure (29) of the crown.

7. A metal, in particular tin, bath of a production line for producing flat float glass according to any one of the preceding claims, **characterized in that** it comprises a gantry crane (30) enabling the quick mounting and dismounting of segments of the crown (6), as well as the handling operations for the assembling and repairing of equipment of the tin bath.

8. A method for limiting the differential expansion between a vat (5) and a crown (6) of a metal, in particular tin, bath of a production line for producing flat float glass, with edge sealing cases (7) providing the connection between the above two elements, with the bath vat (5) consisting of a metal case (8), lined with refractory material (9), which can move on a framework (21) in the direction of the glass production line, except for stationary bearings (23), referred to as "fixed points", formed by a region rigidly connecting the case to the framework (21), with the crown (6) resting on sliding or rolling bearings (24) which guide and orient the thermal expansion of the entire crown in the direction of the production line, and comprising a "fixed point" (26) close to a point right above the "fixed point" (23) of the vat (5),
**characterized in that** it consists in monitoring the longitudinal differential expansion between the vat (5) and the crown (6) by continuously measuring same and in adjusting the cooling of the vat so as to keep said longitudinal differential expansion within defined limits, so as to prevent deterioration of the luting seams (19) between the vat (5) and the crown (6) that can cause gas leaks between the bath environment and the outside of the vat.

9. A method according to claim 8, **characterized in that** the longitudinal differential expansion between the crown (6) and the vat (5) is measured using expansion sensors.

10. A method according to claim 8 or 9, **characterized in that** the longitudinal differential expansion is kept below +/-0.05mm/m.
